## Europäisches Patentamt
## European Patent Office
## Office européen des brevets

(19)

(11) Veröffentlichungsnummer : **0 012 989**
**B1**

(12)

# EUROPÄISCHE PATENTSCHRIFT

(45) Veröffentlichungstag der Patentschrift :
28.04.82

(21) Anmeldenummer : **79105259.0**

(22) Anmeldetag : **18.12.79**

(51) Int. Cl.³ : **A 01 G   9/14, E 06 B   3/05**

(54) **Gewächshaus.**

(30) Priorität : **21.12.78 DE 2855373**
**26.11.79 DE 2947572**

(43) Veröffentlichungstag der Anmeldung :
**09.07.80 (Patentblatt 80/14)**

(45) Bekanntmachung des Hinweises auf die Patenterteilung : **28.04.82 Patentblatt 82/17**

(84) Benannte Vertragsstaaten :
**CH FR GB NL**

(56) Entgegenhaltungen :
**BE - A - 855 847**
**CH - A - 252 085**
**CH - A - 292 709**
**CH - A5 - 592 800**
**DE - A - 2 046 975**
**DE - A - 2 213 816**
**DE - B - 1 086 032**
**DE - C - 938 872**
**DE - U - 1 920 178**
**FR - A - 1 464 098**
**US - A - 2 685 851**

(73) Patentinhaber : **Wahl GmbH + Co**
**Dieselstrasse 2 Postfach 25**
**D-8876 Jettingen-Scheppach (DE)**

(72) Erfinder : **Wahl, Emil**
**Kaspar-Manz-Strasse 10**
**D-8883 Gundelfingen/Donau (DE)**

(74) Vertreter : **Weickmann, Heinrich, Dipl.-Ing Patentan-**
**wälte Dipl.Ing.H.Weickmann et al**
**Dipl.Phys.Dr.K.Fincke Dipl.Ing.F.A.Weickmann**
**Dipl.Chem.B.Huber, Dr.-Ing.H.Liska Möhlstrasse 22**
**D-8000 München 86 (DE)**

## Gewächshaus

Die Erfindung betrifft ein Gewächshaus, insbesondere Kleingewächshaus, mit wenigstens einer von einem Rahmen umfaßten und gehaltenen, lichtdurchlässigen Scheibe, insbesondere aus Glas, bei dem der Rahmen der Scheibe ein aus Metall bestehendes Grundprofil aufweist, das von der Scheibe durch thermisch isolierendes Material getrennt ist.

Nach der FR-A-14 64 098 ist es bekannt, eine von einem Rahmen umfaßte und gehaltene, lichtdurchlässige Scheibe aus Glas gegenüber dem Rahmen durch thermisch isolierendes Material zu trennen. Der Rahmen weist ein aus Metall bestehendes Grundprofil auf. Die Kanten der Scheibe sind von dem thermisch isolierenden Material umschlossen. Auf die Außenseite des thermisch isolierenden Materials drückt eine Scheibenhalteleiste, die mittels Schrauben und Muttern an das Grundprofil zu ziehen ist. Statt der Schrauben können auch elastisch federnde Hakverbindungen zwischen dem Grundprofil oder einem Innenprofil und der Scheibenhalteleiste vorgesehen sein.

Nach der belgischen Patentschrift 855 847 ist es bekannt, eine Scheibenhalteleiste aus thermisch isolierendem Material, die einen im wesentlichen T-förmigen Querschnitt hat, zum Festhalten zweier Scheiben auf einem Grundprofil zu verwenden. Die beiden Querschenkel des T-Profils übergreifen dabei je eine Scheibenkante. In dem Längsschenkel des T-Profils befindet sich ein Schlitz, der auf einen Steg des Grundprofils aufzustecken ist.

Nach dem deutschen Gebrauchsmuster 19 20 178 ist es bekannt, an der Innenseite eines Grundprofils, an dem eine Scheibe gehaltert ist, zwei eine Dichtungsleiste umgreifende Arme vorzusehen. Nach dem gleichen Gebrauchsmuster ist es bekannt, zur Eckverbindung zweier Grundprofile untereinander oder mit Pfostenprofilen in die Grundprofile oder Pfostenprofile einschiebbare Eckwinkel vorzusehen. Zur Sicherung sind die Schenkel der Eckwinkel mit an den Grundprofilen oder Pfostenprofilen festzusetzenden Madenschrauben durchsetzt.

Aufgabe der Erfindung ist es, das thermisch isolierende Material fertigungstechnisch einfach anbringen und im angebrachten Zustand sichern zu können und den Druck auf die Scheibe einstellbar machen zu können.

Zur Lösung dieser Aufgabe ist die Erfindung dadurch gekennzeichnet, daß das Grundprofil des Rahmens einen zur Außenseite hin offenen Stirnraum aufweist, der formschlüssig einen Kern aus thermisch isolierendem Material umschließt, und daß in diesem Kern ein in seiner Stirnfläche mündender, parallel zu den Seitenwänden des Stirnraums etwa mittig zwischen diesen Seitenwänden verlaufender Schlitz vorgesehen ist, der der Aufnahme des Längsschenkels einer im Querschnitt etwa T-förmigen Scheibenhalteleiste dient, die mit wenigstens einem Querschenkel eine Scheibe angreift und gegen ein am Grundprofil befestigtes Widerlager drückt.

Diese Konstruktion gestattet nicht nur ein fertigungstechnisch einfaches Anbringen des Kerns aus thermisch isolierendem Material, sondern ermöglicht es auch, den Druck auf die Scheibe durch mehr oder weniger tiefes Eindrücken des Längsschenkels der Scheibenhalteleiste in den im Kern befindlichen Schlitz einzustellen.

Um den Längsschenkel der Scheibenhalteleiste in dem im Kern befindlichen Schlitz festlegen zu können, weist bevorzugt dieser Längsschenkel beidseitig zahnartige Rillen zum Festhaken in dem Wandmaterial des Schlitzes im Kern auf.

Um das Grundprofil von der Stärke der Scheibe unabhängig zu machen und auch davon, ob die Scheibe eine Einfachscheibe oder eine Doppelscheibe ist, ist bevorzugt an wenigstens einer Seite des Grundprofils in Längsrichtung dieser Seite formschlüssig ein Auflageprofil einschiebbar, an dem auf der Rückseite der Scheibe parallel zur Ebene der Scheibe verlaufend eine Auflageleiste angesetzt ist. Grundsätzlich kann man daher das Auflageprofil in einfacher Weise austauschen.

Ein Auflageprofil kann für zwei unterschiedliche Scheibenstärken verwendet werden oder sowohl für eine Einfachscheibe als auch für eine Doppelscheibe, wenn die Auflageleiste an das Auflageprofil seitlich von dessen Längsmittellinie angesetzt ist. Je nachdem, wie das Auflageprofil an das Grundprofil eingeschoben ist, hat dann die Auflageleiste einen größeren oder kleineren Abstand von der Scheibenhalteleiste.

Um die Auflageleiste von der Scheibe thermisch zu isolieren, ist die Auflageleiste bevorzugt von einem im Querschnitt U-förmigen Widerlagerprofil aus thermisch isolierendem Material umschlossen.

Die Scheibenhalteleiste kann auch für den Fall, daß die Scheibe ausstellbar sein soll, am freien Ende eines ihrer Querschenkel als Scharnierteil, insbesondere als Scharnierzylinderförper, ausgebildet sein.

Um mehrere unabhängig voneinander ausstellbare Scheiben in geringem Abstand nebeneinander anordnen zu können, ist bevorzugt an einer Seite des Grundprofils ein sich in der Höhe der Öffnung seines Stirnraums zur Seite erstreckender Schenkel angesetzt, der rückseitig zwei eine Dichtungsleiste umgreifende Arme aufweist. Im Schließzustand liegt diese Dichtungsleiste auf der Rahmenkonstruktion des Gewächshauses auf.

Um eine an die Auflageprofile angepaßte Eckverbindung für die Grundprofile zu erzielen, ist bevorzugt vorgesehen, daß zur Eckverbindung zweier Grundprofile untereinander oder mit Pfostenprofilen und zur Sicherung der in sie eingeschobenen Auflageprofile mit ihren Schenkeln in die Grundprofile oder Pfostenprofile einschiebbare, mit in Flucht zu den Auflageleisten verlaufenden Auflageansätzen versehene Eckwinkel vorgesehen sind.

Mittels dieser Eckwinkel ist nicht nur eine Eckverbindung der Grundprofile möglich, sondern auch eine Sicherung der Auflageprofile gegen Verschiebung in Längsrichtung ; durch die Auflageansätze an den Eckwinkeln wird die Auflagefläche für die Scheibe nicht gemindert.

Um in einfacher Weise die Eckwinkel an den Grundprofilen sichern zu können, sind bevorzugt die Schenkel der Eckwinkel von an den Grundprofilen festzusetzenden Madenschrauben durchsetzt. Um die Madenschrauben fest anziehen zu können und ohne Verwirkung auch lösen zu können, sind sie bevorzugt als Imbusschrauben ausgebildet.

In besonders einfacher Weise sind die Eckwinkel in großen Stückzahlen aus Aluminiumguß herzustellen.

Übergreifen die Grundprofile die Auflageprofile an beiden Längsseiten mit Hakenprofilen, wie dies oben beschrieben ist, so weisen bevorzugt die Schenkel der Eckwinkel an ihren Längsseiten stufenförmige, ebenfalls von den Hakenprofilen zu übergreifende Absetzungen auf. Die Eckwinkel sind dann ebenso in die Grundprofile einzuschieben wie die Auflageprofile.

Damit die Eckwinkel auch über die Enden von den Grundprofilen hinaus in die Grundprofile einschiebbar sind, sind die stufenförmigen Absetzungen bevorzugt im Bereich der Ecken der Eckwinkel unterbrochen.

Um die Auflageprofile mit den Eckwinkeln im Stoß in Eingriff bringen zu können, weisen bevorzugt die Auflagenansätze an den Eckwinkeln nächst den Enden der Schenkel der Eckwinkel Ausnehmungen auf.

Die Erfindung wird im folgenden an Ausführungsbeispielen unter Hinweis auf die beigefügten Zeichnungen beschrieben.

Fig. 1 zeigt· schematisch ein Gewächshaus ;

Fig. 2 zeigt vergrößert einen Schnitt durch die Rahmenkonstruktion des Gewächshauses nach Fig. 1 in der Schnittlinie II-II ;

Fig. 3 zeigt einen Schnitt durch eine Rahmenkonstruktion, bei der an einem Fenster von der einen Seite ein Einfachfenster und von der anderen Seite ein Doppelfenster angesetzt ist ;

Fig. 4 zeigt einen Schnitt durch die Rahmenkonstruktion im Bereich zweier nebeneinander liegender, ausstellbarer Scheiben ;

Fig. 5 zeigt einen Eckwinkel in Seitenansicht in Blickrichtung auf seine beiden Schenkel ;

Fig. 6 zeigt den Eckwinkel nach Fig. 5 in Blickrichtung VI in Fig. 5 ; und

Fig. 7 zeigt einen Stoß zwischen zwei Grundprofilen und einem Eckpfosten bei Verwendung der Eckwinkel.

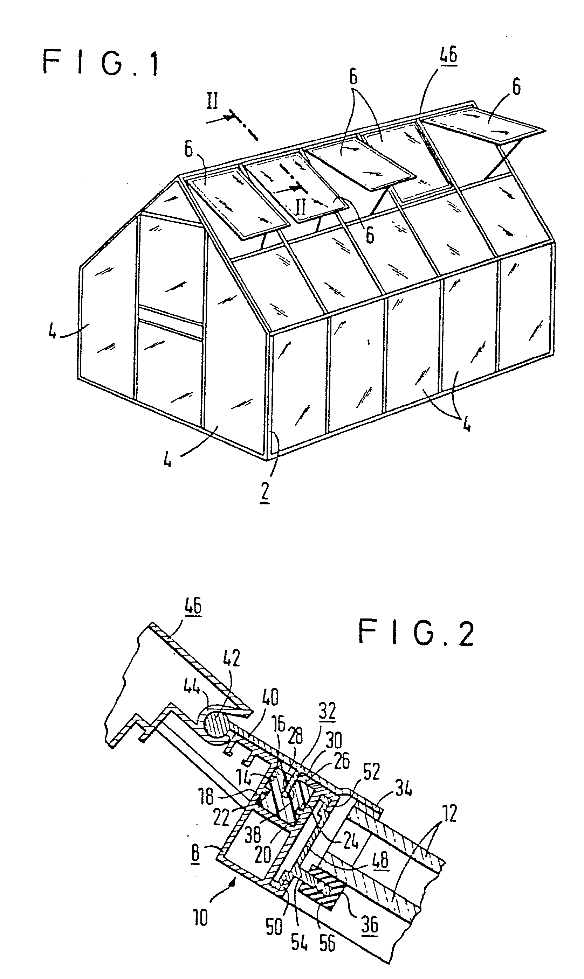

Das Gewächshaus nach Fig. 1 besteht im wesentlichen aus einer Rahmenkonstruktion 2 mit eingesetzten Scheiben 4. Im Dach sind fünf nebeneinander liegende, ausstellbare Fenster 6 dargestellt. Die Rahmenkonstruktion 2 besteht im wesentlichen aus Metall ; die Scheiben 4, auch die der Fenster 6, sind von der Rahmenkonstruktion 2 durch thermisch isolierendes Material getrennt.

Aus Fig. 2 ist der Querschnitt durch das Grundprofil 8 eines Rahmens 10 erkennbar, der eine Doppelscheibe 12 umfaßt und hält. Das Grundprofil 8 weist einen zur Außenseite hin offenen Stirnraum 14 auf, der formschlüssig einen Kern 16 aus thermisch isolierendem Material, etwa aus Kunststoff, umschließt. Um den Kern 16 im Stirnraum 14 festzuhalten, sind an die Seitenwände 18, 20 des Stirnraums Halteleisten 22, 24 angesetzt, die in entsprechende Schlitze des Kerns 16 eingreifen. Der Kern 16 ist somit in Längsrichtung des Grundprofils in das Grundprofil einschiebbar. In dem Kern 16 ist ein in seiner Stirnfläche 26 mündender, parallel zu den Seitenwänden 20, 22 des Stirnraums 14 etwa mittig zwischen diesen Seitenwänden 20, 22 verlaufender Schlitz 28 vorgesehen. Dieser Schlitz 28 dient der Aufnahme des Längsschenkels 30 einer im Querschnitt etwa T-förmigen Scheibenhalteleiste 32, die mit einem Querschenkel 34 die Scheibe 12 angreift und gegen ein noch näher zu erläuterndes Widerlager 36 am Grundprofil 8 drückt. Der Längsschenkel 30 der Scheibenhalteleiste 32 weist beidseitig zahnartige Rillen 38 zum Festhaken in dem Wandmaterial des Schlitzes 28 im Kern 16 auf. An das freie Ende des Querschenkels 40 der Scheibenhalteleiste 32 ist einstückig ein Zylinderkörper 42 angeformt, der von einer zylindrischen Scharnierlagerpfanne 44 im Firstprofil 46 des Gewächshauses umschlossen ist.

An einer Seite des Grundprofils ist in Längsrichtung dieser Seite formschlüssig ein Anlageprofil 48 eingeschoben. Zu diesem Zweck sind an das Grundprofil 8 einander zugewandte Hakenprofile 50, 52 angeformt. An das Anlageprofil 48 ist auf der Rückseite der Doppelscheibe 12 parallel zur Ebene dieser Scheibe 12 eine Auflageleiste 54 angesetzt. Die Seiten des freien Endes dieser Auflageleiste 54 sind gerillt, so daß sie ein im Querschnitt U-förmiges Widerlagerprofil 56 aus thermisch isolierendem Material, insbesondere aus Gummi, festhalten. Die Auflageleiste 54 ist an das Auflageprofil 48 seitlich von dessen Längsmittellinie eingesetzt.

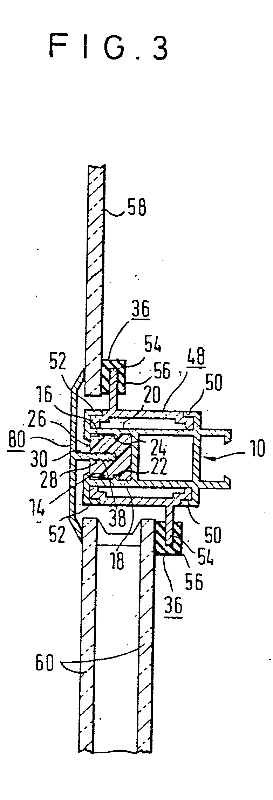

Aus Fig. 3 ist erkennbar, daß in der Einschublage die Auflageleiste 54 des Widerlagers für eine Einfachscheibe 58 und in der anderen Einschublage als Widerlager für eine Doppelscheibe 60 dient.

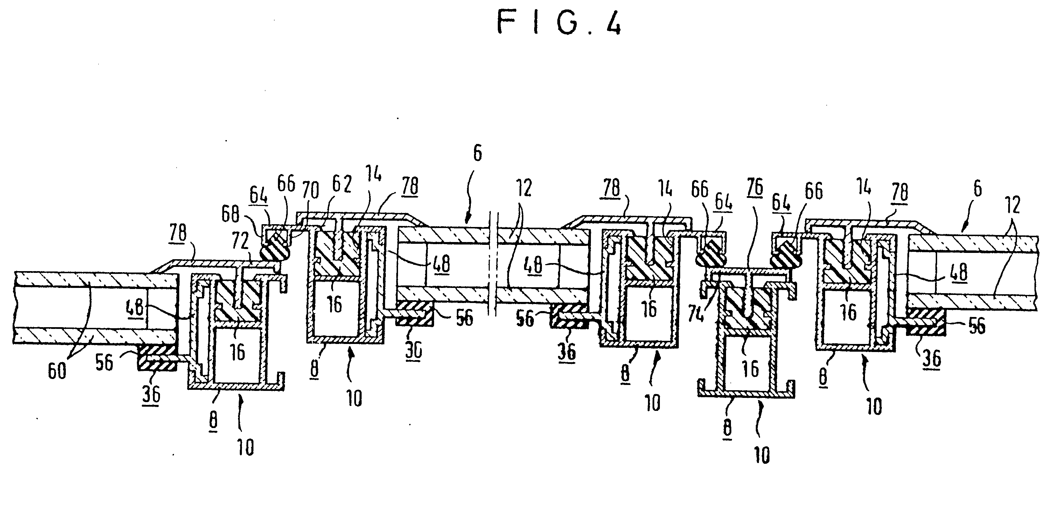

Aus Fig. 4 ist ersichtlich, daß an einer Seite des Grundprofils 8 ein sich in Höhe der Öffnung 62 seines Stirnraums 14 zur Seite erstreckender Schenkel 64 angesetzt ist, der rückseitig zwei eine Dichtungsleiste 66 umgreifende und in sie eingreifende Arme 68, 70 aufweist. Die solche Dichtungsleisten 66 tragenden Grundprofile 8 gehören zu den ausstellbaren Fenstern 6 nach Fig. 1.

Die Dichtungsleiste liegt auf Schenkeln 72 bzw. 74 von Scheibenhalteleisten 76, 78 auf bzw. auf Elementen, die der Scheibenhalteleiste 32 nach Fig. 2 oder der Scheibenhalteleiste 80 nach Fig. 3 entsprechen.

Besonders bemerkenswert ist, daß man für die Rahmenkonstruktion des Hauses im wesentlichen mit einem einzigen Grundprofil 8 und einem einzigen Anlageprofil 48 auskommt, dennoch aber Scheiben verscheidener Stärke, also in erster Linie Einfachscheiben oder Doppelscheiben, einsetzen und festhalten kann.

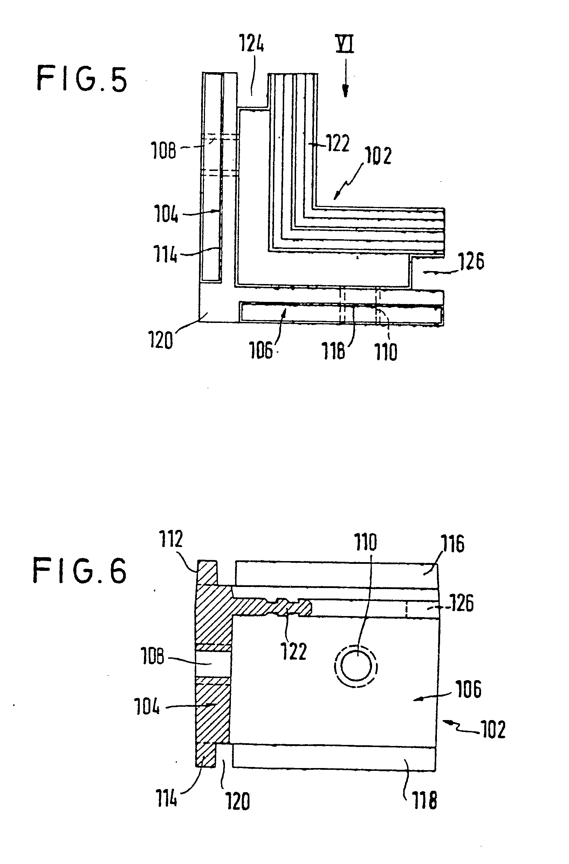

Der Eckwinkel 102 nach den Fig. 5 und 6 weist zwei Schenkel 104 und 106 auf. Die Schenkel 104, 106 sind von Gewinden 108, 110 durchsetzt, die Madenschrauben zum Festsetzen der Eckwinkel 102 an Grundprofilen aufnehmen können. An ihren Längsseiten sind die Schenkel 104, 106 der Eckwinkel 102 mit stufenförmigen Absetzungen 112, 114, 116, 118 versehen, die von Hakenprofilen an den Grundprofilen zu übergreifen sind. Im Bereich der Ecken 120 der Eckwinkel 102 sind diese Absetzungen 112, 114, 116, 118 unterbrochen. An das Eckstück ist innenseitig ein ebenfalls winkelförmiger Auflageansatz 122 angesetzt, und zwar derart, daß er in Flucht zu den Auflageleisten verläuft. Nächst den Enden der Schenkel 104, 106, ist der Auflageansatz 122 mit Ausnehmungen 124, 126 versehen.

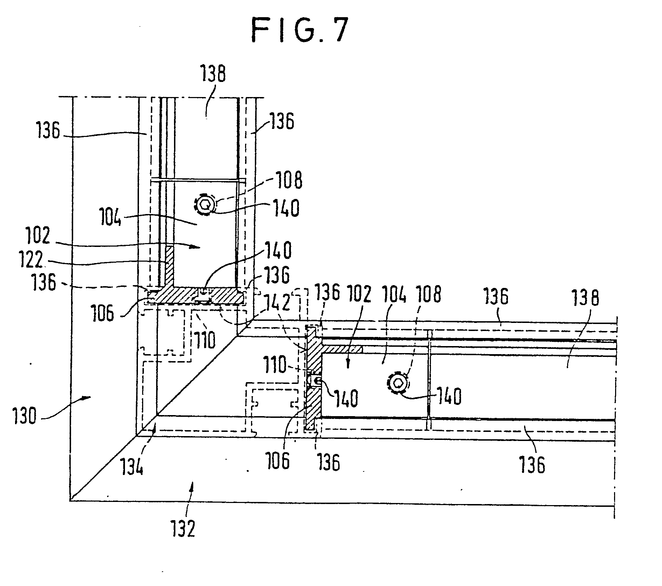

Fig. 7 zeigt zwei Grundprofile 130, 132 und (da aufrecht stehend, gestrichelt) einen Eckpfosten 134. Die Grundprofile 130, 132 und der Eckpfosten 134 weisen Hakenprofile 136 auf, in die die Schenkel 104, 106 von Eckwinkeln 102 einschiebbar sind. Die Schenkel 104 stoßen fast an Auflageprofile 138 an, die ebenfalls in die Hakenprofile 136 an den Grundprofilen 130, 132 eingeschoben sind. Mittels in die Gewinde 108, 110 eingeschraubten Imbusschrauben 140 sind die Schenkel 104, 106 der Eckwinkel 102 an die Hakenprofile 136 gedrückt. Die inneren Enden der Imbusschrauben 140 stützen sich dabei an den Auflageflächen 142 des Eckpfostens 134 bzw. der Grundprofile 130, 132 ab.

Mittels der Eckwinkel können vertikale Pfosten mit einem bodenseitigen Grundrahmen verbunden werden oder auch allgemein Pfosten untereinander, die waagrecht, senkrecht oder schräg verlaufen, je nach dem gewünschten Skelett des Gewächshauses.

## Ansprüche

1. Gewächshaus, insbesondere Kleingewächshaus, mit wenigstens einer von einem Rahmen (2) umfaßten und gehaltenen, lichtdurchlässigen Scheibe (4), insbesondere aus Glas, bei dem der Rahmen (2) der Scheibe (4) ein aus Metall bestehendes Grundprofil (8) aufweist, das von der Scheibe (4) durch thermisch isolierendes Material getrennt ist, dadurch gekennzeichnet, daß das Grundprofil (8) des Rahmens (10) einen zur Außenseite hin offenen Stirnraum (14) aufweist, der formschlüssig einen Kern (16) aus thermisch isolierendem Material umschließt, und daß in diesem Kern (16) ein in seiner Stirnfläche (26) mündender, parallel zu den Seitenwänden (20, 22) des Stirnraums (14) etwa mittig zwischen diesen Seitenwänden (20, 22) verlaufender Schlitz (28) vorgesehen ist, der der Aufnahme des Längsschenkels (30) einer im Querschnitt etwa T-förmigen Scheibenhalteleiste (32, 78, 80) dient, die mit wenigstens einem Querschenkel (34) eine Scheibe (4, 12, 58, 60) angreift und gegen ein am Grundprofil (8) befestigtes Widerlager (36) drückt.

2. Gewächshaus nach Anspruch 1, dadurch gekennzeichnet, daß der Längsschenkel (30) der Scheibenhalteleiste (32, 78, 80) beidseitig zahnartige Rillen (38) zum Festhaken in dem Wandmaterial des Schlitzes (28) im Kern (16) aufweist.

3. Gewächshaus nach Anspruch 1 oder 2, dadurch gekennzeichnet, daß an wenigstens einer Seite des Grundprofils (8) in Längsrichtung dieser Seite formschlüssig ein Auflageprofil (48) einschiebbar ist, an dem auf der Rückseite der Scheibe (4, 12, 58, 60) parallel zur Ebene der Scheibe (4, 12, 58, 60) verlaufend eine Auflageleiste (54) angesetzt ist.

4. Gewächshaus nach Anspruch 3, dadurch gekennzeichnet, daß die Auflageleiste (54) von einem im Querschnitt U-förmigen Widerlagerprofil (36) aus thermisch isolierendem Material umschlossen ist.

5. Gewächshaus nach Anspruch 3 oder 4, dadurch gekennzeichnet, daß die Auflageleiste (54) das Auflageprofil (48) seitlich von dessen Längsmittellinie angesetzt ist.

6. Gewächshaus nach einem der vorhergehenden Ansprüche 1 bis 5, dadurch gekennzeichnet, daß an das Ende eines Querschenkels (40) der Scheibenhalteleiste (32) ein Scharnierzylinderkörper (42) angesetzt ist.

7. Gewächshaus nach einem der vorhergehenden Ansprüche, dadurch gekennzeichnet, daß an einer Seite des Grundprofils (8) ein sich in Höhe der Öffnung (62) seines Stirnraums (14) zur Seite erstreckender Schenkel (64) angesetzt ist, der rückseitig zwei eine Dichtungsleiste (66) umgreifende Arme (68, 70) aufweist.

8. Gewächshaus nach einem der vorhergehenden Ansprüche, dadurch gekennzeichnet, daß zur Eckverbindung zweier Grundprofile (130, 132) untereinander oder mit Pfostenprofilen (134) und zur Sicherung der in sie eingeschobenen Auflageprofile (138) mit ihren Schenkeln (104, 106) in die Grundprofile (130, 132) oder Pfostenprofile (134) einschiebbare, mit in Flucht zu den Auflageleisten (138) verlaufenden Auflageansätzen (122) versehene Eckwinkel (102) vorgesehen sind.

9. Gewächshaus nach Anspruch 8, dadurch gekennzeichnet, daß die Schenkel (104, 106) der Eckwinkel (102) von an den Grundprofilen (130, 132) oder Pfostenprofilen (134) festzusetzenden Madenschrauben (140) durchsetzt sind.

10. Gewächshaus nach Anspruch 9, dadurch gekennzeichnet, daß die Madenschrauben (140) Imbusschrauben sind.

11. Gewächshaus nach einem der vorhergehenden Ansprüche 8 bis 10, dadurch gekennzeichnet, daß die Eckwinkel (102) aus Aluminiumguß bestehen.

12. Gewächshaus nach Anspruch 8, dadurch gekennzeichnet, daß die Schenkel (104, 106) der Eckwinkel (102) an ihren Längsseiten stufenförmige, von den Hakenprofilen (136) zu übergreifende Absetzungen (112, 114, 116, 118) aufweisen.

13. Gewächshaus nach Anspruch 12, dadurch gekennzeichnet, daß die stufenförmigen Absetzungen (112, 114, 116, 118) im Bereich der Ecken (120) der Eckwinkel (102) unterbrochen sind.

14. Gewächshaus nach einem der vorhergehenden Ansprüche, dadurch gekennzeichnet, daß die Auflageansätze (122) an den Eckwinkeln (102) nächst den Enden der Schenkel (104, 106) der Eckwinkel (102) Ausnehmungen (124) aufweisen.

## Claims

1. A hothouse, especially a small hothouse, comprising at least one light permeable pane (4) which is surrounded and held by a frame (2), said pane being particularly of glass, in which the frame (2) of the pane (4) has a basic profile (8) of metal, which is separated from said pane (4) by thermally insulating material, characterized in that the basic profile (8) of the frame (10) has a frontal space (14) which opens outwards and which positively surrounds a core (16) of thermally insulating material, and that in said core (16) a slit (28) which opens in its frontal space (26) and extends parallel to the sidewalls (20, 22) on the frontal space (14) approximately centrally between said sidewalls (20, 22) is provided, while said slit (28) is intended to accept the long leg (30) of a pane-holding strip (32, 78, 80) which is approximately T-shaped in cross-section, and which engages with at least one cross-leg (34) one of the panes (4, 12, 58, 60) and presses against an abutment (36) secured on said basic profile (8).

2. Hothouse according to claim 1, characterized in that the long leg (30) of the pane-holding strip (32, 78, 80) has on both sides toothed grooves (38) to hook firmly into the wall material of said slit (28) in the core (16).

3. Hothouse according to claim 1 or 2 above, characterized in that on at least one side of the basic profile (8) a support profile (48) can be positively inserted in the longitudinal direction of this side, while on said support profile (48) on the back of said pane (4, 12, 58, 60) a support strip (54) is mounted parallel to the plane of the pane (4, 12, 58, 60).

4. Hothouse according to claim 3 above, characterized in that said support strip (54) is surrounded by an abutment profile (36) which is U-shaped in cross-section and is made of thermally insulating material.

5. Hothouse according to claim 3 or 4 above, characterized in that the support strip (54) of the support profile (48) is mounted laterally from the longitudinal centre line of said profile (48).

6. Hothouse according to one of the claims above, 1 to 5, characterized in that on the end of one cross-leg (40) of the pane-holder strip (32), a hinged cylindrical body (42) is placed.

7. Hothouse according to one of the claims above, characterized in that on one side of the basic profile (8) a leg (64) which extends laterally on the level of the opening (62) of its frontal space (14) is mounted, which has on its back side two arms (68, 70) which embrace a sealing strip (66).

8. Hothouse according to one of the claims above, characterized in that angle brackets (102) are provided for the corner connection of two basic profiles (130), 312) to each other or with upright profiles (134), said angle brackets being insertable by means of their legs (104, 106) in the basic profiles (130, 132) or upright profiles (134) to secure the support profiles (138) inserted in them, said angle brackets (102) being also equipped with support attachments (102) which extend flush with the support strips (138).

9. Hothouse according to claim 8 above, characterized in that the legs (104, 106) of said angle brackets (102) are penetrated by headless screws (140) to be fixed on the basic profiles (130, 132) or upright profiles (134).

10. Hothouse according to claim 9, characterized in that the headless screws (140) are socket head cap screws.

11. Hothouse according to one of the claims above, 8-10, characterized in that the angle brackets (102) are made of cast aluminium.

12. Hothouse according to claim 8 above, characterized in that the legs (104, 106) of the angle bracket (102) have on their longitudinal sides graduated depositions (112, 114, 116, 118) overlapped by the hook profiles (136).

13. Hothouse according to claim 12, above characterized in that the graduated depositions (112, 114, 116, 118) are interrupted in the area of the corners (120) of said angle brackets (102).

14. Hothouse according to one of the claims above, characterized in that the support attachments (122) on the angle brackets (102) have recesses located next to the ends of the legs (104, 106) of said angle brackets (102).

## Revendications

1. Serre, en particulier petite serre, comprenant au moins une vitre (4) transparente, en particulier en verre, entourée et maintenue par un cadre (2), le cadre (2) de la vitre (4) comportant un profilé de base (8) réalisé en métal, séparé de la vitre (4) par un matériau thermiquement isolant, caractérisé en ce que le profilé de base (8) du cadre (10) comprend un espace frontal (14) ouvert en direction du côté externe, entourant par concordance des formes un noyau (16) en matériau thermiquement isolant, et en ce qu'il est prévu dans ce noyau (16) une fente (28) débouchant sur sa surface frontale (26), disposée parallèlement aux parois latérales (20, 22) de l'espace frontal (14) et approximativement au centre entre ces parois latérales (20, 22), qui sert à recevoir la branche longitudinale (30) d'une bande de retenue de vitre (32, 78, 80) dont la section transversale est approximativement en forme de « T », qui est appliquée par au moins une branche transversale (34) sur une vitre (4, 12, 58, 60) et qui exerce une pression contre une butée (36) fixée au profilé de base (8).

2. Serre selon la revendication 1, caractérisée en ce que la branche longitudinale (30) de la bande de retenue de vitre (32, 78, 80) comprend sur ses deux côtés des rainures en formes de dents (38) destinées à s'accrocher fermement dans le matériau de la paroi de la fente (28) prévue dans le noyau (16).

3. Serre selon la revendication 1 ou 2, caractérisée en ce que sur au moins un côté du profilé de base (8) en direction longitudinale de ce côté peut être inséré un profilé d'appui (48) de formes conjuguées, sur lequel est prévue une bande d'appui (54) passant sur le côté arrière de la vitre (4, 12, 58, 60) et parallèlement au plan de ladite vitre (4, 12, 58, 60).

4. Serre selon la revendication 3, caractérisée en ce que la bande d'appui (54) est entourée par un profilé de butée (36) ayant une section transversale en forme de « U » et réalisé en un matériau thermiquement isolant.

5. Serre selon la revendication 3 ou 4, caractérisée en ce que la bande d'appui (54) du profilé d'appui (46) est disposée latéralement par rapport à son axe médian longitudinal.

6. Serre selon l'une des revendications 1 à 5, caractérisée en ce qu'à l'extrémité d'une branche transversale (40) de la bande de retenue de vitre (32) est prévu un corps cylindrique (42) formant charnière.

7. Serre selon l'une des revendications précédentes, caractérisée en ce que sur un côté du profilé de base (8) est prévue une branche (64) s'étendant en direction de ce côté à la hauteur de l'ouverture (62) de son espace frontal (14), et comprenant sur son côté arrière deux bras (68, 70) entourant une bande d'étanchéité (66).

8. Serre selon l'une des revendications précédentes, caractérisée en ce que pour réaliser la liaison d'angle entre deux profilés de base (130, 132) l'un avec l'autre ou avec des profilés de poteaux (134) et pour la fixation des profilés d'appui (138) enfoncés par leurs branches (104, 106) dans lesdits profilés de base (130, 132) ou lesdits profilés de poteaux (134) sont prévues des cornières d'angle (102) pouvant être insérées dans les profilés et munies de saillies d'appui (122) disposées en alignement avec les bandes d'appui (138).

9. Serre selon la revendication 8, caractérisée en ce que les branches (104, 106) des cornières d'angle (102) sont traversées par des vis sans tête (140) destinées à être fixées aux profilés de base (130, 132) ou aux profilés de poteaux (134).

10. Serre selon la revendication 9, caractérisée en ce que les vis sans tête (140) sont des vis à extrémité de tête cylindrique à six pans creux.

11. Serre selon l'une des revendications 8 à 10, caractérisée en ce que les cornières d'angle (102) sont réalisées en fonte d'aluminium.

12. Serre selon la revendication 8, caractérisée en ce que les branches (104, 106) des cornières d'angle (102) comportent, sur leurs côtés longitudinaux, des retraits en forme de gradins (112, 114, 116, 118) sur lesquels se disposent les profilés en crochets (136).

13. Serre selon la revendication 12, caractérisée en ce que les retraits en forme de gradins (112, 114, 116, 118) sont interrompus dans la zone des coins (120) des cornières d'angle (102).

14. Serre selon l'une des revendications précédentes, caractérisée en ce que les saillies d'appui (122) des cornières d'angle (102) comprennent des évidements (124) à proximité des extrémités des branches (104, 106) desdites cornières d'angle (102).

F I G . 1

F I G . 2

# F I G . 3

# F I G . 4

0 012 989

FIG.5

FIG.6

# FIG. 7